# EUROPEAN PATENT APPLICATION

(11) **EP 0 709 281 A1**
(43) Date of publication of application: **01.05.1996**
(21) Application number: 95500145.8
(22) Date of filing: 25.10.1995
(51) Int. Cl.: B62J 7/04

(54) **Adjustable bracket for pannier caseholder for motorcycles and similar vehicles**

(30) Priority: 31.10.1994 ES 9402764
(71) Applicant: Lucia Monforte, Pedro, E-08100 Mollet del Valles (ES)
(72) Inventor: Lucia Monforte, Pedro, E-08100 Mollet del Valles (ES)
(74) Representative: Ponti Sales, Adelaida

(57) **Abstract**

It comprises a structure (1) attached to the side of the motorcycle chassis (2) by means of mounting members (4) adapted to each type of chassis, said structure being provided with means of anchorage (5) for a side case (6); the structure incorporates an upwardly extensible arm (9) orientated towards the rear part of the motorcycle, provided with devices (8) which allow the height of said arm (9) to be adjusted and fastened at will, while the upper end (9a) of the arm is attached to the caseholder (12).

The bracket can be associated to any type of chassis, thus simplifying and reducing the cost of its manufacture.

## Description

The present invention relates to an adjustable bracket for the pannier caseholders of motorcycles and similar vehicles which can be used, interchangeably, to hold side cases only and/or rear case topbox.

### BACKGROUND OF THE INVENTION

Known in the art are caseholders attached to the chassis of the motorcycle and made up of side pieces which, if they have to carry a rear case topbox, have attached to them square or the like on either side which rises towards the rear part of the motorcycle. This means that different types of bracket have to be made, not only in function of whether they have to support or not the rear case topbox, but also in function of the chassis characteristics, with each type of bracket having to be suitable for the height at which the aforesaid rear case must be placed.

### DESCRIPTION OF THE INVENTION

The adjustable bracket for pannier caseholders object of this invention has been designed to solve the disadvantages described.

The bracket in question comprises a structure attached to the side of the motorcycle chassis by means of mounting members adapted to each type of chassis, said structure being provided with means of anchorage for a side case. On the basis of this known embodiment, the bracket of the invention is characterized in that the structure incorporates an upwardly extensible arm, orientated towards the rear part of the motorcycle, provided with devices which allow the height of said arm to be adjusted and fastened at will, while the upper end of the arm is attached to the caseholder.

This allows the same bracket to be associated to any type of chassis, thus simplifying and reducing the cost of its manufacture.

Obviously, it has been envisaged that the bracket consists in two side structures attached to either side of the motorcycle chassis and carrying two extensible arms whose height can be adjusted and fastened at will.

### BRIEF DESCRIPTION OF THE DRAWINGS

For a better understanding of all that is set out in the present specification some drawings are attached in which, only by way of non-limiting example, a practical case of embodiment of the adjustable bracket for caseholders is shown.

In said drawings,
Figure 1 is a side elevation view of the bracket fitted in position for use;
Figure 2 is a rear elevation view showing how the bracket is arranged on either side of the rear part of the motorcycle; and
Figure 3 is a cross-section detail at larger scale along plane III-III of Figure 1.

### DESCRIPTION OF A PREFERRED EMBODIMENT

The bracket shown in the drawings comprises a frame 1 with an outline resembling an irregular "C", fixed to a chassis 2 of a motorcycle 3 by means of mounting members 4 of known type. This frame 1 is provided with anchoring means 5 to secure a side case 6.

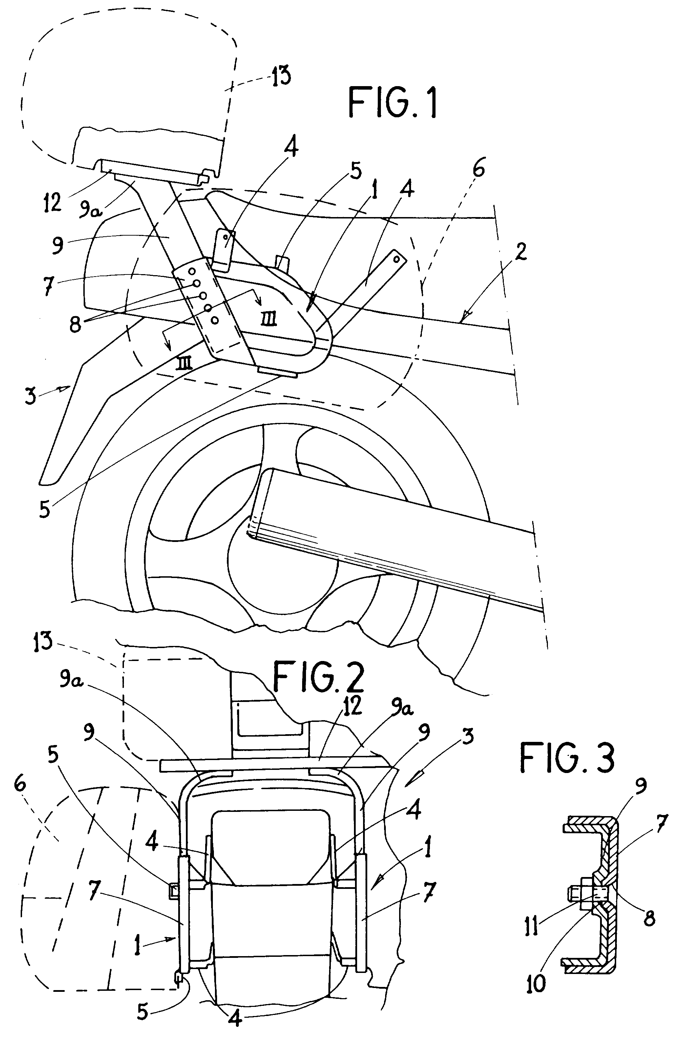

The frame 1 is provided with an inclined profile 7 of C-shaped cross section, with a row of bores 8. The inner face of this profile is fitted with an extensible arm 9 of C-shaped cross section, with bores 10 which can be selectively in register with the bores 8, to allow the passage of securing bolts 11 (Figure 3). The upper end of the extensible arm 9 forms an elbowed section 9a onto which is fixed a caseholder 12 for attachment of a rear case topbox 13.

Each side of the chassis 2 is obviously fitted with an adjustable bracket having the features described.

As can be deduced from all that has been outlined and from observation of the drawing, the adjustable bracket has the advantage that it can be used to hold just side cases 6, in which situation it is not necessary to fit the extensible arm 9, or to hold both side cases and a rear topbox case 13. In this last situation the arm 9 is assembled, its height being adjusted at will by extending it more or less and fixing its position by means of the bolts 11.

Independent of the object of the invention shall be the materials used in manufacturing of the adjustable bracket components, as well as their shapes and dimensions; and every detail not affecting its essential nature can be substituted by another one that is technically equivalent.

## Claims

1. Adjustable bracket for pannier caseholders of motorcycles (3) and similar vehicles, comprising a structure (1) attached to the side of the motorcycle chassis (2) by means of mounting members (4) adapted to each type of chassis, said structure being provided with means of anchorage (5) for a side case (6), characterized in that the structure incorporates an upwardly extensible arm (9) orientated towards the rear part of the motorcycle, provided with devices (8) which allow the height of said arm (9) to be adjusted and fastened at will, while the upper end (9a) of the arm is attached to the caseholder (12).

2. Adjustable bracket for caseholders of motorcycles and similar vehicles, as claimed in Claim 1, characterized in that it consists in two side structures (1) attached to either side of the motorcycle chassis (2) each carrying an extensible arm (9) whose height can be adjusted and fastened at will.
